Europäisches Patentamt

(19) European Patent Office

Office européen des brevets

(11) Publication number: **0 033 335**
**B1**

(12) **EUROPEAN PATENT SPECIFICATION**

(45) Date of publication of patent specification: **23.01.85**

(21) Application number: **80901604.1**

(22) Date of filing: **18.07.80**

(86) International application number:
**PCT/US80/00936**

(87) International publication number:
**WO 81/00299 05.02.81 Gazette 81/04**

(51) Int. Cl.⁴: **G 01 B 9/02**

(54) **REFRACTIVELY SCANNED INTERFEROMETER.**

(30) Priority: **26.07.79 US 61010**
**01.10.79 US 80287**

(43) Date of publication of application:
**12.08.81 Bulletin 81/32**

(45) Publication of the grant of the patent:
**23.01.85 Bulletin 85/04**

(84) Designated Contracting States:
**AT CH DE FR GB LI NL SE**

(56) References cited:
**DE-A-2 814 006**
**US-A-3 684 379**
**US-A-4 084 907**
**US-A-4 165 938**
**US-A-4 190 366**

**N. Applied Optics, Vol. 11, No. 13, issued Mar.**
**1972, Ring and Schofield, pages 507-516**

(73) Proprietor: **LASER PRECISION CORPORATION**
**17875-F Sky Park Circle**
**Irvine, CA 92714 (US)**

(72) Inventor: **CLARKE, William L.**
**2221 Aralia**
**Newport Beach, CA 92660 (US)**
Inventor: **DOYLE, Walter M.**
**2875 Bernard Court**
**Laguna Beach, CA 92651 (US)**

(74) Representative: **Wotherspoon, Graham et al**
**FITZPATRICKS 4 West Regent Street**
**Glasgow G2 1RS Scotland (GB)**

Courier Press, Leamington Spa, England.

## Description

Background of the Invention

This invention relates to the field of interferometry, and particularly to scanning interferometers intended for use in spectrometry. More specifically, its primary focus is on improving Michelson interferometers intended for use in infrared Fourier transform spectroscopy.

The present invention is an improvement relating to the same general subject matter as US—A—4,190,366 (Doyle) (equivalent German application DE—A—2,814,006) and US—A—4,084,907 (Pinard). US—A—4,190,366 discloses and claims an interferometer having stationary reflectors at the end of each interferometer "arm" combined with a wedge-shaped prism movable across one arm to cause scanning and US—A—4,084,907 discloses a compensated beamsplitter for use in a Michelson interferometer.

The present invention is also an improvement relating to the same general subject matter as US—A—4,165,938 (Doyle). This patent discloses and claims an interferometer of the same type as US—A—4,190,366, wherein the orientation and direction of motion of the wedge-shaped scanning prism are such that displacement of the refracted optical beam by the prism is minimized or eliminated.

An article by Ring & Schofield (Applied Optics, Vol. 11, No. 13, March 1972, pp. 507—516) discloses a compensated beamsplitter for use in a Michelson interferometer. However, this is concerned with field broadening and the complex apparatus would be too expensive to use in the field of the present invention.

The interferometers shown in the cited Doyle applications have provided a significant development in the field of Fourier transform spectroscopy. However, certain performance limitations have become apparent in those interferometers, which are attributed to certain optical aberrations not fully compensated for in the Doyle interferometers.

There are three general types of optical aberration encountered in apparatus of this type: (a) chromatic aberration, (b) spherical aberration, and (c) astigmatic aberration.

Chromatic aberration is partially compensated for in the Doyle apparatus by the use of corner reflectors. However, the compensation is only partial, and, further, there is an upper limit in such apparatus on the allowable distance between the scanning wedge and the corner reflector in the same arm. This limit in some cases is not acceptable.

Spherical aberration is minimized in the Doyle apparatus by matching the refractive thickness of the beamsplitter substrate to the refractive thickness of the scanning wedge in its centered position. In other words, the arrangement is such as to equalize the average optical path lengths in those two elements, which are located in different arms of the interferometer.

While this arrangement, as predicted by Doyle, provides a reasonable solution of the spherical aberration problem, it tends to preclude solution of the astigmatism problem, for reasons which will be more fully discussed below.

Astigmatic aberration (astigmatism) was not fully compensated for in the apparatus of the Doyle applications, although it was later discovered that first order terms could be compensated for by a lateral displacement of one of the corner reflectors. Nevertheless, astigmatism has proved to be a limiting factor in the performance of the Doyle apparatus.

The general purpose of the present invention is to retain the significant advantages of the Doyle apparatus, while adding thereto the benefits of maximum compensation for, or balancing of, the three types of optical aberration.

Summary of the Invention

The present invention accordingly provides a spectral analysis interferometer including a first arm in which the optical path leads to a first stationary reflector and a second arm in which the optical path leads to a second stationary reflector and a scanning prism of triangular cross-section arranged to be moved back and forth across the optical path of the first arm to vary the length of the optical path in that arm; characterized by a stationary prism positioned in the second arm, the stationary prism being positioned and dimensioned such that its refractive effect in the optical path of said second arm is substantially equal and opposite to the refractive effect of said scanning prism when in its centred position in the optical path of said first arm.

Since this removes the Doyle solution to the spherical aberration problem, the present invention provides a refractive element which compensates for, or balances, the refractive effect of the movable prism, and which is located in the interferometer arm other than the one having the movable prism. The balancing prism is stationary, and is preferably substantially identical in shape to the movable prism. With this arrangement, in addition to solving the spherical aberration problem, an improved solution of the chromatic aberration problem is provided.

The net result of the foregoing changes is to provide interferometer arms which are fully symmetrical in centred position, i.e., which are so constituted as to be "mirror images" of one another.

In one version of the present invention, the foregoing benefits are obtained by using a total of four optical refractive elements — a beamsplitter, a movable prism, a compensating element to balance the optical refractive effect of the beamsplitter substrate, and a compensating element to balance the optical refractive effect of the movable prism.

In another version of the present invention, the same benefits are obtained by using a total of two optical refractive elements, one in each interferometer arm, which elements are substantially the same in their shapes and optical refractive characteristics. Each element is a wedge-shaped prism. One of them is movable for scanning purposes; the other is stationary and preferably is the one having the beamsplitter surface. The movable prism is preferably very close to the fixed prism and moves along a line parallel to the adjacent surface of the fixed prism. Each interferometer "arm" is perpendicular to the prism surface nearest the reflector at the end of that arm, i.e., the radiation exiting and entering the surface of each prism nearest its reflector intersects that surface at right angles thereto, thus insuring that the motion of the moving prism will conform to the requirements explained in Doyle Patent No. 4,165,938.

Brief Description of the Drawings

Figure 1 is a diagrammatic plan view of an interferometer incorporating the four-element version of the present invention;

Figure 2 is a diagrammatic plan view of an interferometer incorporating the preferred two-element version of the present invention;

Figure 3 is a closeup of the wedge-shaped prisms of Figure 2, showing more clearly the changes in direction of the radiation paths;

Figure 4 is a diagrammatic plan view of a modified version of the preferred form of the invention, in which the wedge-shaped prisms each have a third optical surface through which entering or exiting radiation passes; and

Figure 5 is a particular example of the interferometer of Figure 4, in which the interferometer arms are perpendicular to one another.

Detailed Description of the Specific Embodiments

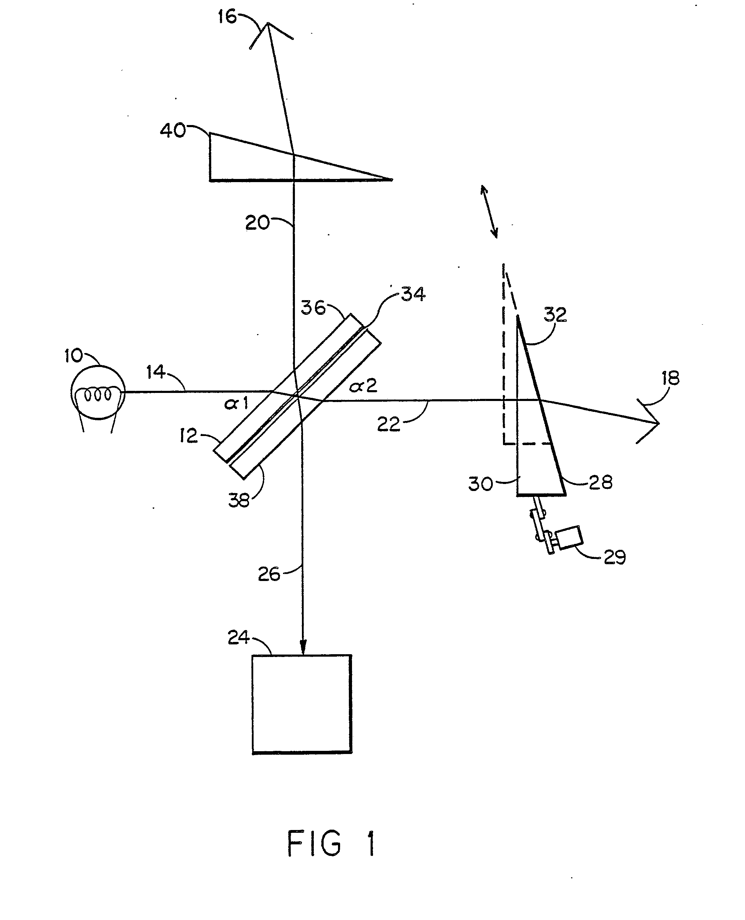

First, referring to Figure 1, the elements which are included in the US—A—4,190,366 and US—A—4,165,938 will be described, and then a detailed analysis will be made of the aberration problems and solutions provided by the present invention.

The Doyle apparatus includes essentially a light source 10, a beamsplitter 12 tilted at a 45° angle to the radiation beam 14, two stationary reflectors 16 and 18 located at the ends of the two interferometer "arms" to reflect the "split" radiation beams 20 and 22, respectively, a detector 24 which receives the recombined radiation 26, and a movable wedge-shaped prism 28 which moves across the path of beam 22 to cause refractive scanning, suitable driving means 29 being provided to cause the movement of prism 28 back and forth across the radiation path. The stationary reflectors 16 and 18 are retro-reflectors, because of significant functional benefits, even though some of their benefits are provided by the optical compensation features added by the present invention. The retro-reflectors 16 and 18 are shown as "cube corner" reflectors; but other types of retro-reflectors, i.e., "cats-eye" reflectors, or "rooftop" reflectors, may be used.

For the reasons taught by US—A—4,165,938, it is important that the direction of scanning motion and the orientation of the prism 28 be such that the apparent deflection point of the optical beam passing through the prism remains at substantially the same position throughout scanning motion of the prism. The arrow in the Figure shows the appropriate direction of scanning motion of the prism 28 for the configuration shown. And the dashed lines illustrate one of the positions to which the prism moves as a result of its translatory motion. Because beam 22 enters prism 28 at right angles to front surface 30 of the prism, it is not angularly deflected until it emerges from the rear surface 32 of the prism. Since scanning motion is along the line defined by rear surface 32 of the prism, the apparent deflection point of beam 22, and the apparent deflection points of the parallel rays therein, remain at the same point(s) as the prism 28 is moved for scanning purposes. Different shapes of prism 28 and different orientations with respect to the entering beam 22 would require different directions of translatory motion in order to meet the stated condition.

With only the elements thus far described, experience indicates that astigmatic aberrations are produced which constitute a significant limiting factor in performance of the apparatus.

Astigmatic aberration is caused primarily by the angular orientation of the refractive portion of the beamsplitter 12. The partially reflective, partially transmitting surface of the beamsplitter is shown at 34. This is the functioning surface of the beamsplitter. Since it must, of necessity, be supported by a substrate, or plate, portion 36, which could be provided on either side of surface 34, the substrate 36 unavoidably injects a refractive factor into the apparatus. Because the beamsplitter, by its very nature, has to be oriented at an angle, generally 45°, to the radiation 14 from source 10, the substrate 36 constitutes a refractive element tilted at an angle to the direction of propagation, thereby introducing asymmetrical distortion, or astigmatism, into the optical system.

In a conventional, or non-refractive, interferometer, adjusted for equal path lengths, the field-of-view (FOV) is in principle not limited by lateral coherence effects. As the length of one of the arms is varied away from this condition, the coherent FOV will be reduced due to the joint dependence of phase on both arm length and angle of propagation. The foregoing reference to conventional interferometers means those in which the length of the variable-length radiation path is changed by moving the reflector in one of the interferometer arms; whereas interferometers following the teachings of the Doyle applications may be conveniently referred to as refractive interferometers, because the length of the variable-length radiation path is changed by movement of the refractive element across one of the interferometer arms.

Refractive interferometers have a similar FOV phenomenon, requiring the refractive path lengths in the two arms to be mutually compensating. In the earlier refractive interferometers, second order effects of this type were compensated by making the optical path length in the beamsplitter equal to the average optical path length in the wedge. An analysis of lateral coherence effects has been performed which indicates that the prior approach is probably not adequate.

In order to solve this problem, it is necessary to compensate for the beamsplitter substrate 36 with a similar element in the other arm of the interferometer. This compensating element should have the same refractive effect as substrate 36, and it should be so oriented with respect to the optical path as to provide the same 45° angle of intersection of the radiation path. Such a compensating element is shown in Figure 1 at 38. Although the overall refractive effect is what needs to be balanced by compensating element 38, it is preferable that it have the same refractive index and the same thickness as substrate 36, as well as having the same angular orientation. If desired, the beamsplitter surface 34 could be placed on the element 38 as a substrate, instead of the element 36. As shown in Figure 1, the elements 36 and 38 are parallel, and the angles $\alpha 1$ and $\alpha 2$ are both 45°.

The inclusion of the beamsplitter compensating element 38 in the variable-length arm of the interferometer creates an imbalance of the refractive path lengths in the two arms because of the presence of refractive scanning element 28. In order to meet the spherical aberration problem created by this imbalance, a compensating element is included in the fixed-length interferometer arm, which, in centered position of the interferometer, will provide a refractive path equal to the radiation path length through the prism 28. While this solution of the spherical aberration problem could be accomplished by a plate having a uniform optical thickness equal to the average optical path length in prism 28, it is preferable to use a wedge-shaped prism 40, having the same shape as prism 28, and oriented toward the fixed-length optical path in the same way that prism 28 is oriented toward the variable-length optical path. Spherical aberration tends to create different curvatures of the radiation wavefronts at the detector, resulting in a distortion balanced around the system axis. Matching the optical path lengths in the two interferometer arms, in centered position, is the appropriate solution of the problem.

The use of a compensating prism 40 which matches prism 28 has the additional benefit of providing complete balancing of chromatic dispersion in the two arms of the interferometer, thereby providing a more complete solution of the chromatic aberration problem than would be provided solely by the use of retro-reflectors. Chromatic aberration results from a non-flat wavefront, due to the wavelength-dependent refractive index which determines the amount of bending of the light rays as they pass through the prism 28. Balancing this effect with the matching prism 40, preferably located in the other arm of the interferometer from scanning prism 28, is the best solution of the chromatic aberration problem.

Compensating prism 40 is stationary, and it should be located at the same position with respect to its arm of the interferometer as the position of the prism 28 with respect to its arms of the interferometer. This means that the distance of compensating, or balancing, prism 40 from reflector 16 should be the same as the distance of movable prism 28 from reflector 18 when prism 28 is in its centered position.

From the foregoing description, it can be seen that the best results, in terms of avoidance of spherical, astigmatic and chromatic aberrations, in an interferometer of the refractive type, can be obtained by providing completely symmetrical interferometer arms, in which both the beamsplitter substrate and refractive wedge are fully compensated for, or balanced, in the other arm of the interferometer. With this fully symmetrical arrangement, the interferometer will have no limit on FOV when prism 28 is at centered position.

Although the primary solution of the chromatic aberration problem is provided by the stationary balancing prism 40, it is still highly desirable, and in fact necessary, to use retro-reflectors 16 and 18. The retro-reflectors are considered necessary because the wedge-shaped prisms, if flat reflective mirrors were used, would create a dispersion of rays which, while identical in the two arms, would be too broadly dispersed at the detector 24. Additionally, the retro-reflectors provide several advantages; and, because they are both stationary, there is no problem due to their relative bulk. For one thing, they tend to compensate for any chromatic aberration due to imperfect matching of the two wedge-shaped prisms 28 and 40. Use of the retro-reflectors also makes the optical system less vulnerable to problems due to slight misalignment of the wedge-shaped scanning prism 28. In other words, use of retro-reflectors reduces sensitivity to angular errors of the wedge motion. Furthermore, the retro-reflectors tend to compensate for astigmatism in the system. And finally, the retro-reflectors provide a preferred approach to dual beam, i.e., dual detector, spectroscopy, as discussed in US—A—4,190,366, and also in Doyle US—A—4,183,669.

It should also be noted that the use of a dual beam spectrometer of the type disclosed in US—A—4,183,669, is rendered more feasible by the increased FOV due to the full optical compensation provided by the present application.

The interrelation of the various optical features of the present invention is significant in providing the desired accuracy of the complete apparatus. As explained in US—A—4,165,938, the orientation and direction of motion of the scanning wedge 28 are of particular importance where retro-reflectors are used. And, as outlined above, the retro-reflectors contribute to solution of the aberration problems; and their use is made feasible by the fact that scanning is accomplished by wedge 28 and not by movement of one of the reflectors. Given the foregoing facts, it becomes desirable in balancing out the aberration problems to compensate for both the beamsplitter and the scanning wedge, as detailed above.

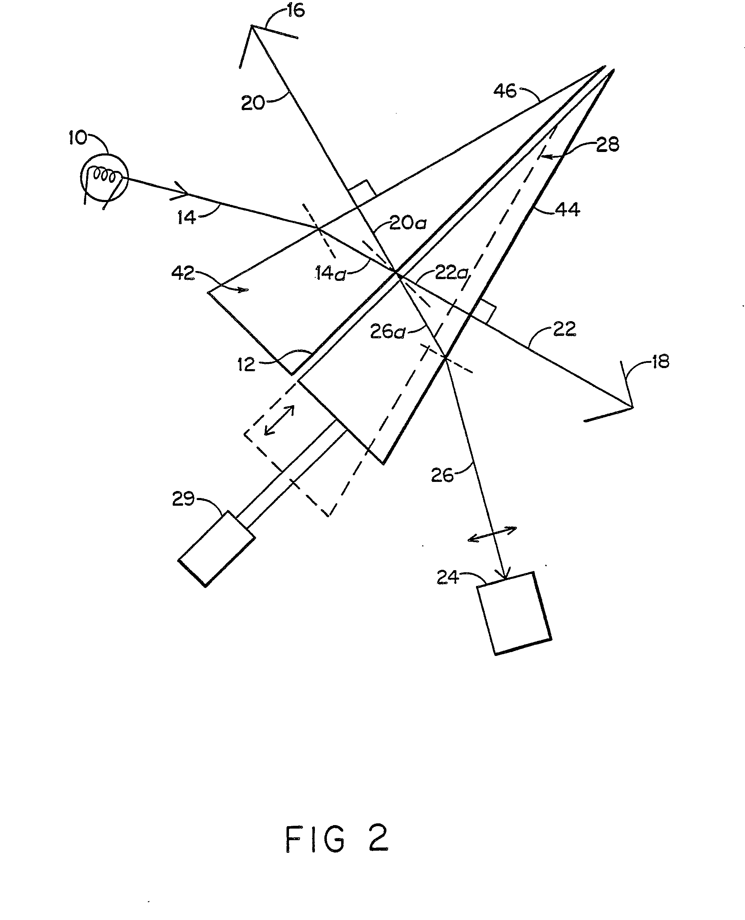

In order to provide the aberation-avoidance benefits of the structure of Figure 1, while reducing the number of arm-intersecting optical elements to two instead of four, it is necessary to make the movable scanning wedge and the beamsplitter substrate mutually compensating elements. Therefore, they are substantially identical, as shown in Figure 2. The beamsplitter substrate is shown at 42, and it constitutes a wedge-shaped member having the same shape and optical characteristics as the scanning wedge, or prism, 28. The beamsplitter 12 is provided by a coating on the inner surface of substrate element 42, i.e., the surface nearest scanning wedge 28. The movable wedge-shaped prism, or scanning wedge, 28 and the fixed wedge-shaped prism, or beamsplitter substrate, 42 are so arranged as to be "mirror images" of one another in the two arms of the interferometer.

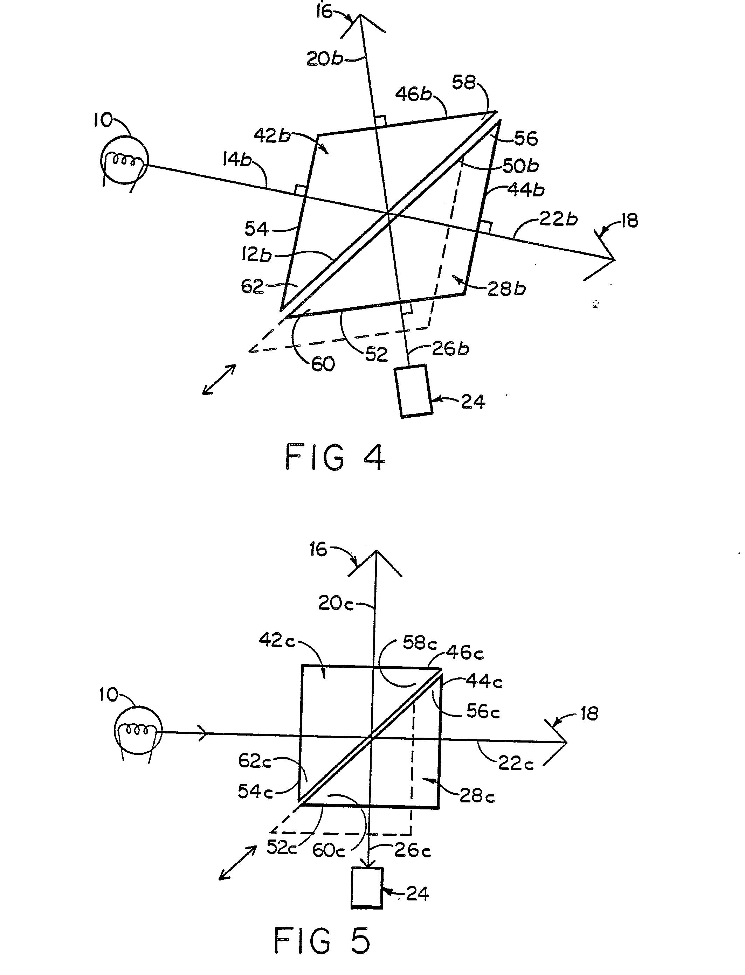

It is obvious that in Figure 2 the two arms of the interferometer, i.e., the optical paths 20 and 22, are not at right angles to one another, as is usually the case in Michelson interferometers. The only case in which the arms are at right angles is illustrated in Figure 5, which is discussed below. The major departures in the present invention from customary interferometer design are a result of the fundamental functional uniqueness of the interferometer disclosed herein.

The orientation of interferometer arms 20 and 22 is dictated by the requirement that arm 22 be perpendicular to the nearest surface 44 of the movable wedge 28. This requirement is based on the direction of motion of the movable wedge, and on the fact, taught by No. US—A—4,165,938, that the apparent deflection point of the optical beam passing through the movable wedge should remain at the same position throughout the scanning motion.

The direction of motion of the movable wedge 28 should be in the direction shown for effective functioning of the interferometer. The space between the two optical wedges 42 and 28 should be as small as possible, consistent with the avoidance of mechanical contact between them as wedge 28 is moved. This closeness of wedges 42 and 28 is important in order to minimize chromatic aberration. If they were not located very close, the lever arms between each wedge and its related corner reflector (16, 18) would be different, and differential wavelength-dependent lateral displacements at the reflectors would occur. Another way of explaining the requirement for closeness of the two wedges is to point out that they must be close in order to balance the interferometer arms, which should be as nearly identical as possible. In other words, everything in the two arms should be symmetrical with respect to the beamsplitter surface 12, which is the "center" of the interferometer. If the two wedges were in contact with one another, the interferometer arms would be identical. But such contact is not possible because of the scanning motion of wedge 28.

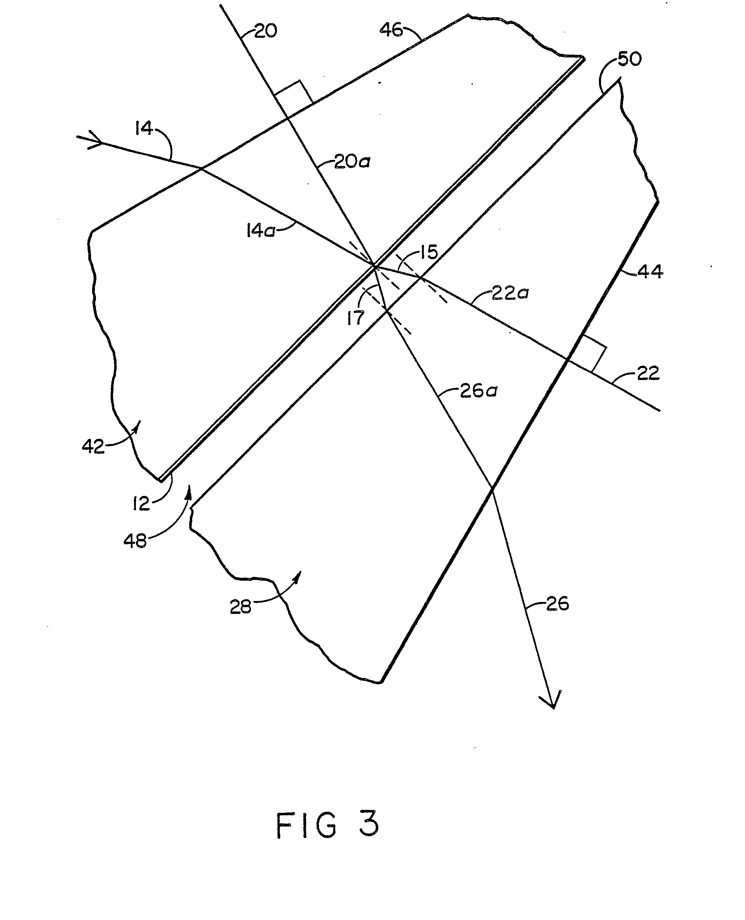

This situation is more clearly depicted in Figure 3, which is a closeup of the "center" of the interferometer. As shown in Figure 3, the optical path 14 from the source is deflected at surface 46 of wedge 42 to follow path 14a within the wedge, and is deflected again to follow path 15 as it leaves the inner surface of wedge 42 at beamsplitter 12. Thus a deflected path 15 occurs in the air gap 48 between the two wedges. As optical path 15 intersects inner surface 50 of movable wedge 28, it is again deflected, and it then follows optical path 22a, which is that portion of arm 22 within wedge 28, and which is parallel to path 14a. The lateral deflection of path 22a from path 14a should be minimized in order to minimize chromatic aberration by keeping air gap 48 as small as possible.

It is important that optical path 22a within movable wedge 28 and the remainder of arm 22 leading to reflector 18 be in direct alignment with one another, i.e., that they constitute a non-deflected straight line. And this will be true only if arm 22 is perpendicular to surface 44 of wedge 28.

The direction of scanning motion of wedge 28, as shown by the arrow, must be parallel to the beamsplitter 12 because of the requirement for minimized space between the two wedges throughout the scan. At the same time, as taught in US—A—4,165,938, the wedge motion must be along the line defined by the apparent deflection points of the rays passing through the scanning wedge 28. Therefore, it is necessary to simultaneously meet these two requirements. In order to do so, the deflection point of the optical path 22a through wedge 28 must remain at the inner surface 50 of the wedge as scanning motion occurs. This will only be true if optical paths 22a and 22 are in direct alignment, thus causing inner surface 50 of wedge 28 to be the only deflecting surface for the optical path through scanning wedge 28. In other words, in order for the deflection of the optical path to take place at the inner surface 50 of the scanning wedge, the optical path must be perpendicular to the outer surface 44 of the scanning wedge.

The design requirement that optical path 22 be perpendicular to surface 44, combined with the parallelism requirement of surfaces 12 and 50, determines the direction of portion 14a of the optical path, and also determines the direction of portion 14, once the angle of the wedges has been determined. The decision as to the apex angle of scanning wedge 28 depends on the desired length of the scanning motion. A relatively narrow angle has the advantage of minimizing the criticality of mechanical motion. A relatively wide angle has the advantage of providing a greater effective optical scanning distance, and hence improved spectral resolution for a given mechanical scanning distance.

Once the apex angle of scanning wedge 28 has been determined, the apex angle of fixed wedge 42 is established, because the two wedges must be substantially identical in order to make the interferometer arms symmetrical, thereby minimizing optical aberrations. Because of the equal angles of wedges 28 and 42, the optical geometry results in a perpendicular relationship between optical path, or arm, 20 and the outer surface 46 of fixed wedge 42, i.e., optical path 20 is in direct alignment with the portion 20a thereof which passes through the fixed wedge.

The radiation which recombines at the beamsplitter 12, coming from arm 22 reflected by mirror 18, and from arm 20 reflected by mirror 16, follows optical path 17 through air gap 48, and is deflected at surface 50 of wedge 28 to follow optical path 26a through the wedge. It is deflected again as it exits the wedge at surface 44, and thereafter follows optical path 26 to the detector 24. It will be noted that, as wedge 28 is moved for scanning purposes, the optical path 26 is laterally displaced, as shown by the arrow crossing path 26. This lateral displacement of the output beam 26 can be adjusted for at the detector 24 by increasing the size of the focusing optics.

While, theoretically, the beamsplitter coating 12 could be provided on the inner surface of movable wedge 28 instead of the inner surface of fixed wedge 42, it is much better to locate it on the fixed wedge because the alignment of the beamsplitter in the interferometer is critical, and movement of the beamsplitter would tend to cause misalignment.

In the centered position of the interferometer, the length of the optical path through the movable wedge 28 should equal its length through the fixed wedge 42. Therefore, the initial adjustment of the position of movable wedge 28 to "center" it will include an adjustment to compensate for the slight lateral displacement of the optical path 14a—22a due to air gap 48.

It will be apparent that the three forms of optical aberration — astigmatic, spherical, and chromatic — are compensated for, or balanced, to substantially the same extent as in the embodiment of Figure 1.

Astigmatic aberration is minimized by the fact that the optical path intersects the refractive surfaces within the interferometer at the same angle in each arm of the interferometer. Astigmatism is caused when light goes through a critical inner surface of the interferometer, such as the beamsplitter substrate, at a nonperpendicular angle. This is compensated for by the balancing effect due to the equal angle of intersection of the optical path with the inner surface of the other wedge, i.e., the scanning wedge. In other words, the angle of intersection of the optical path is the same at the inner surface 50 of scanning wedge 28 as it is at the inner surface of fixed wedge 42 which carries the beamsplitter coating 12. Thus the astigmatic effects created in one wedge are substantially "cancelled out" as the beam enters the other wedge.

Spherical aberration is also substantially "cancelled out" because both the non-refractive and the refractive optical path lengths in the two interferometer arms are substantially identical in the centered position of the scanning wedge.

Chromatic aberration is minimized by providing matching wedges having equal apex angles, thus balancing the effects of the chromatically dispersed wavefront in one interferometer arm with a similar chromatically dispersed wavefront in the other interferometer arm.

Figure 14 shows an embodiment of the invention in which each wedge-shaped refractive element — the movable scanning wedge and the fixed compensating wedge — has three polished surfaces instead of two, and is so designed that (a) the optical path from the source intersects the fixed wedge at a different surface of the fixed wedge from the surface intersected by the optical path to the adjacent reflector, and (b) the optical path to the detector intersects the movable wedge on a different surface of the movable wedge from the surface intersected by the optical path to the adjacent reflector. This has certain functional advantages over the embodiment of Figures 2 and 3, but it is only applicable where a wider wedge angle is usable for scanning purposes.

The design illustrated in Figures 2 and 3 works quite well for small wedge angles and is probably usable with wedge angles as large as 20 or even 30 degrees. However, as the wedge angle is increased, it becomes necessary to increase the lengths of the wedges so that all four of the optical beams — 14, 20, 22, and 26 — will enter and leave the wedges through the poished surfaces. In addition, the lateral displacement during scanning of beam 26 leading to the detector will become more severe as the wedge angle is increased.

The use of a large wedge angle may be desirable in some cases, particularly when a large effective optical scanning distance is desired, as in high resolution spectroscopy. For such cases, the geometry of Figure 4 will be advantageous. As shown, the movable scanning wedge 28b has three optical (polished) surfaces — inner surface 50b adjacent beamsplitter 12b, surface 44b nearest reflector 18, and a third optical surface 52 which is intersected by the optical path 26b leading to detector 24. The fixed compensating wedge 42b also has three optical (polished) surfaces — the inner surface on which beamsplitter coating 12b is supported, surface 46b nearest reflector 16, and a third optical surface 54 which is intersected by the optical path 14b leading from radiation source 10. Because of the presence in Figure 4 of significant angles at both ends of the inner surfaces of both .wedges, the wedge, or apex, angle of movable wedge 28b which determines the refractive changes during scanning is identified by the numeral 56; and the related, or balancing, angle of fixed wedge 42b is indicated by the numeral 58. As in the preceding embodiment, these angles 56 and 58 are equal in order to minimize optical aberrations. The size of angles 56 and 58 is determined by the desired scanning parameters.

Also, for the reasons discussed in connection with Figures 2 and 3, it is necessary that optical path 22b leading to reflector 18 be substantially perpendicular to the surface 44b of scanning wedge 28b nearest reflector 18. Consequently, optical path 20b· leading to reflector 16 will be substantially perpendicular to the surface 46b nearest reflector 16. Also it is necessary that the direction of motion of wedge 28b during scanning be substantially parallel to the beamsplitter 12b, as indicated by the arrow.

A further advantage will result if surface 52 of scanning wedge 28b is made parallel to surface 46b of fixed wedge 42b. In this case, as shown, the detector beam 26b will automatically be perpendicular to the exit surface 52, and no displacement of this beam will occur during scanning, as demonstrated by the dashed line position of the scanning wedge. For this condition, the cross section of the scanning wedge 28b will be an isoceles triangle, i.e., its angle 60 will equal its angle 56. For symmetry, we may also make angle 62 of fixed wedge 42b equal to angles 57, 58 and 60, with all optical paths entering and leaving the two wedges at right angles. This latter condition has the additional advantage of eliminating any chromatic dispersion of the incoming light beam 14b.

Figure 5 illustrates a species of Figure 4 which constitutes the only design in which the interferometer arms are perpendicular to one another. In Figure 5, the movable scanning wedge 28c and the fixed compensating wedge 42c constitute, geometrically, a split cube. The cross section of each wedge is a right-angled triangle, in which the angles 56c, 58c, 60c and 62c are each 45°. The arms of the interferometer — optical paths 20c and 22c, leading to the respective reflectors 16 and 18 — are perpendicular to one another. The other relationships described in connection with Figure 4 are applicable, including the fact that optical path 26c to detector 24 is not laterally displaced during scanning, as demonstrated by the dashed line position of scanning wedge 28c.

The large wedge angle in Figure 5, which determines the ratio between wedge motion and spectral resolution, has the disadvantage that it decreases the opto-mechanical scan amplification, but it has the advantage of providing a higher resolution.

The optical structures of Figures 4 and 5 provide the same benefits as that of Figures 2 and 3, insofar as the balancing of, or compensating for, optical aberrations is concerned. The explanation of these aspects of the present invention has already been provided.

As pointed out in the discussion of Figure 1, the best results, in terms of avoidance of spherical, astigmatic, and chromatic aberrations, in an interferometer of the refractive type, can be obtained by providing completely symmetrical interferometer arms, in which both the beamsplitter substrate and the scanning wedge are fully compensated for, or balanced, in the other arm of the interferometer. In the preferred embodiment shown in Figures 2—5, only two optical elements are required, each balancing the other. With this fully symmetrical arrangement, the interferometer will have no limit on field of view when the scanning wedge is at centered position. In other words, the two-element embodiment of Figures 2—5 retains the aberration-compensating benefits of the embodiment of Figure 1, while eliminating the disadvantages of optical losses and increased cost which are associated with the use of four separate refractive elements.

## Claims

1. A spectral analysis interferometer including a first arm (22) in which the optical path leads to a first stationary reflector (18) and a second arm (20) in which the optical path leads to a second stationary reflector (16), and a scanning prism (28) of triangular cross-section arranged to be moved back and forth across the optical path of the first arm (22) to vary the length of the optical path in that arm; characterized by a stationary prism (40 or 42) positioned in the second arm, the stationary prism (40 or 42) being positioned and dimensioned such that its refractive effects in the optical path of said second arm (20) is substantially equal and opposite to the refractive effects of said scanning prism (28) when in its centred position in the optical path of said first arm (22).

2. A spectral analysis interferometer according to claim 1, in which the scanning prism (28) is so orientated and has such a direction of movement across the optical path that the apparent deflection point of the optical beam passing through the scanning prism (28) remains at substantially the same position throughout the motion of the scanning prism (28).

3. A spectral analysis interferometer according to claim 1, in which the scanning prism (28) and the stationary prism (40) are right angled wedges with the same wedge angle.

4. A spectral analysis interferometer according to claim 1 or claim 2, in which the scanning prism (28) and the stationary prism (42) are adjacent and a semi-reflective surface is provided on one of the adjacent faces to act as a beamsplitter (12).

5. A spectral analysis interferometer according to claim 4, in which the semireflective surface is provided on the scanning prism (28).

6. A spectral analysis interferometer according to claim 4, in which the semireflective surface is provided on the stationary prism (42).

7. A spectral analysis interferometer according to claims 2, 3 or 4, in which the optical path of the first arm (22) intersects at right angles the surface of the scanning prism (28) nearest the first reflector (18).

8. A spectral analysis interferometer according to claims 2, 3, 4 or 7, in which the scanning prism (28) is the only refractive element in the first arm (22), and the stationary prism (42) is the only refractive element in the second arm (20).

9. A spectral analysis interferometer according to claims 2, 3, 4, 7 or 8, in which the scanning prism (28) has three optical surfaces (50, 44, 52), the first of which is parallel to the beamsplitter surface, the second of which is intersected by the first arm (22), and the third of which is intersected by the optical path exiting the interferometer.

10. A spectral analysis interferometer according to claim 1 or claim 2 in which a semi-reflective beamsplitting surface (34) is provided on a substrate (36) separate from the prisms (28, 40).

11. A spectral analysis interferometer according to claim 10, in which the substrate (36) forms part of the optical path of said first arm (22) and compensating means is provided in the optical path of said second arm (20).

12. A spectral analysis interferometer according to claim 11, in which the compensating means includes a refractive element (38) having a refractive effect which is substantially equal and opposite to the refractive effect of the substrate (36), said element (38) being in the other arm of the interferometer from said substrate (36), and having the same refractive thickness as said substrate (36) and the same angular orientation to its optical path as said substrate (36) has to its optical path.

**Patentansprüche**

1. Interferometer für die Spektralanalyse, mit einem ersten Ast (22), in dem der optische Pfad zu einem ersten feststehenden Reflektor (18) führt, einem zweiten Ast (20), in dem der optische Pfad zu einem zweiten feststehenden Reflektor (16) führt, und einem einen dreieckigen Querschnitt aufweisenden Abtastprisma (28), das über den optischen Pfad des ersten Astes (22) zur Veränderung der Länge des optischen Pfades in diesem Ast hin- und herverstellbar ist, gekennzeichnet durch ein feststehendes, im zweiten Ast angeordnetes Prisma (40 oder 42), das so angeordnet und dimensioniert ist, daß seine Brechwirkung im optischen Pfad des zweiten Astes (20) etwa gleich, aber entgegengesetzt der Breckwirkung des in seiner Zentrierstellung im optischen Pfad des ersten Astes (22) befindlichen Abtastprismas (28) ist.

2. Interferometer für die Spektralanalyse nach Anspruch 1, dadurch gekennzeichnet, daß das Abtastprisma (28) so ausgerichtet ist und in einer solchen Verstellrichtung über den optischen Pfad verstellbar ist, daß der scheinbare Ablenkpunkt des durch das Abtastprisma (28) hindurchtretenden optischen Strahles während der gesamten Verstellung des Abtastprismas (28) im wesentlichen an der gleichen Stelle bleibt.

3. Interferometer für die Spektralanalyse nach Anspruch 1, dadurch gekennzeichnet, daß das Abtastprisma (28) und das feststehende Prisma (40) rechtwinkelige Keile mit gleichem Keilwinkel sind.

4. Interferometer für die Spektralanalyse nach Anspruch 1 oder 2, dadurch gekennzeichnet, daß das Abtastprisma (28) und das feststehende Prisma (42) benachbart angeordnet und eine halbreflektrierende Fläche auf einer der benachbarten Seiten angeordnet ist, um als Strahlteiler (12) zu wirken.

5. Interferometer für die Spektralanalyse nach Anspruch 4, dadurch gekennzeichnet, daß die halbreflektierende Oberfläche am Abtastprisma (28) vorgesehen ist.

6. Interferometer für die Spektralanalyse nach Anspruch 4, dadurch gekennzeichnet, daß die halbreflektierende Oberfläche am feststehenden Prisma (42) vorgesehen ist.

7. Interferometer für die Spektralanalyse nach den Ansprüchen 2, 3 oder 4, dadurch gekennzeichnet, daß der optische Pfad des ersten Astes (22) die dem ersten Reflektor (18) nächstliegende Oberfläche des Abtastprismas (28) rechtwinkelig schneidet.

8. Interferometer für die Spektralanalyse nach den Ansprüchen 2, 3, 4 oder 7, dadurch gekennzeichnet, daß das Abtastprisma (28) das einzige brechend wirkende Element im ersten Ast (22) und das feststehende Prisma (42) das einzige brechend wirkende Element im zweiten Ast (20) ist.

9. Interferometer für die Spektralanalyse nach den Ansprüchen 2, 3, 4, 7 oder 8, dadurch gekennzeichnet, daß das Abtastprisma (28) drei optische Oberflächen (50, 44, 52) aufweist, deren erste parallel zur Strahlteilerfläche liegt, deren zweite vom ersten Ast (22) geschnitten wird und deren dritte von dem das Interferometer verlassenden optischen Pfad geschnitten wird.

10. Interferometer für die Spektralanalyse nach Anspruch 1 oder 2, dadurch gekennzeichnet, daß eine halbreflektierende Strahlteilerfläche (34) auf einem Träger (36) gesondert von den Prismen (28, 40) vorgesehen ist.

11. Interferometer für die Spektralanalyse nach Anspruch 10, dadurch gekennzeichnet, daß der Träger (36) einen Teil des optischen Pfades des ersten Astes (22) bildet und im optischen Pfad des zweiten Astes (20) eine Kompensationseinrichtung vorgesehen ist.

12. Interferometer für die Spektralanalyse nach Anspruch 11, dadurch gekennzeichnet, daß die Kompensationseinrichtung ein brechendes Element (38) aufweist, dessen brechende Wirkung etwa gleich groß wie aber der brechenden Wirkung des Trägers (36) entgegengesetzt ist, welches Element (38) in dem anderen Ast des Interferometers als der Träger (36) angeordnet ist und die gleiche brechende Dicke wie der Träger (36) sowie die gleiche Winkelorientierung zu seinem optischen Pfad wie der Träger (36) zu dessen optischem Pfad aufweist.

## Revendications

1. Interféromètre pour analyse spectrale comprenant un premier bras (22) dans lequel le trajet optique conduit à un premier réflecteur fixe (18); et un second bras (20) dans lequel le trajet optique conduit à un second réflecteur fixe (16), et un prisme de balayage (28) à section triangulaire agencé pour être déplacé dans les deux sens transversalement au trajet optique du premier bras (22) pour faire varier la longueur du chemin optique dans ce bras, caractérisé par un prisme fixe (40 ou 42) positionné dans le second bras, le prisme fixe (40 ou 42) étant positionné et dimensionné de façon que son effet réfractif dans le trajet optique dudit second bras (20) soit sensiblement égal et opposé à l'effet réfractif dudit prisme de balayage (28) lorsqu'il est à sa position centrée dans le trajet optique dudit premier bras (22).

2. Interféromètre pour analyse spectrale selon la revendication 1, dans lequel le prisme de balayage (28) a une orientation et, transversalement au trajet optique, une direction de déplacement telles que le point apparent de déviation du trajet optique passant par le prisme de balayage (28) reste sensiblement à la même position tout au long du déplacement du prisme de balayage (28).

3. Interféromètre pour analyse spectrale dans lequel le prisme de balayage (28) et le prisme fixe (40) sont des coins à angle droit ayant le même angle de coin.

4. Interféromètre pour analyse spectrale selon la revendication 1 ou la revendication 2, dans lequel le prisme de balayage (28) et le prisme fixe (42) sont adjacents, une surface semi-réflective étant prévue sur une des faces adjacentes pour jouer le rôle de diviseur de faisceau (12).

5. Interféromètre pour analyse spectrale selon la revendication 4, dans lequel la surface semi-réflective est prévue sur le prisme de balayage (28).

6. Interféromètre pour analyse spectrale selon la revendication 4, dans lequel la surface semi-réflective est prévue sur le prisme fixe (42).

7. Interféromètre pour analyse spectrale selon une des revendications 2, 3 ou 4, dans lequel le trajet optique du premier bras (22) coupe à angle droit la face du prisme de balayage (28) la plus proche du premier réflecteur (18).

8. Interféromètre pour analyse spectrale selon une des revendications 2, 3, 4 ou 7, dans lequel le prisme de balayage (28) est le seul élément rétractif dans le premier bras (22), et le prisme fixe (42) le seul élément rétractif dans le second bras (20).

9. Interféromètre pour analyse spectrale selon une des revendications 2, 3, 4, 7 ou 8, dans lequel le prisme de balayage (28) possède trois faces optiques (50, 44, 52) dont la première est parallèle la surface diviseuse de faisceau, la seconde est coupée par le premier bras (22) et la troisième est coupée par le trajet optique sortant de l'interféromètre.

10. Interféromètre pour analyse spectrale selon la revendication 1 ou la revendication 2, dans lequel une surface semi-réflective diviseuse de faisceau (34) est prévue sur un substrat (36) distinct des prismes (28, 40).

11. Interféromètre pour analyse spectrale selon la revendication 10, dans lequel le substrat (36) fait partie du trajet optique dudit premier bras (22) et des moyens compensateurs sont prévus dans le trajet optique dudit second bras (20).

12. Interféromètre pour analyse spectrale selon la revendication 11, dans lequel les moyens compensateurs comprennent un élément réfractif (38) ayant un effet réfractif qui est sensiblement égal et opposé à l'effet réfractif du substrat (36), ledit élément (38) étant dans le bras de l'interféromètre où n'est pas ledit substrat (36) et ayant la même épaisseur réfractive que ledit substrat (36) et la même orientation angulaire par rapport à son trajet optique que ledit substrat (36) a par rapport à son trajet optique.

FIG 1

FIG 2

FIG 3

FIG 4

FIG 5